# DEMANDE DE BREVET EUROPEEN

(11) **EP 1 341 122 A1**
(43) Date de publication de la demande: **03.09.2003**
(21) Numéro de dépôt: 03290492.2
(22) Date de dépôt: 28.02.2003
(51) Int. Cl.: G06M 1/10, A01C 7/10

(54) **Dispositif de comptage de particules telles que des graines distribuées par un semoir**

(30) Priorité: 01.03.2002 FR 0202674
(71) Demandeur: CENTRE NATIONAL DU MACHINISME AGRICOLE, DU GENIE RURAL, DES EAUX ET DES FORETS (CEMAGREF), 92160 Antony (FR)
(72) Inventeur: Marionneau, Anicet, 03110 Charmeil (FR)
(74) Mandataire: Fosse, Danièle

(57) **Abrégé**

L'invention concerne un dispositif de comptage (1) de particules (P) distribuées, telles que des graines distribuées dans un semoir, du type comprenant un capteur piézoélectrique (7, 13, 18) émettant un signal lors du contact d'une particule (P) et des moyens de traitement et d'analyse desdits signaux émis par le capteur (7).

L'invention consiste en ce qu'il comporte en outre un conduit tubulaire (4, 11, 16) intégrable dans le circuit de distribution une à une des particules (P), ledit conduit tubulaire (4) comportant une portion de sa paroi servant de zone de contact (5) pour les particules(P), ladite portion de paroi étant en liaison directe avec la zone sensible (6) dudit capteur piézoélectrique (7) de manière à lui transmettre la force exercée par les particules (P) lors d'un contact des particules (P) avec la zone de contact (5), ainsi que des moyens de guidage de chaque particule (P) circulant dans ledit conduit (4) pour forcer chaque particule (P) à entrer en contact par frottement avec la zone de contact (5).

Application aux dispositifs de distribution de particules.

## Description

La présente invention concerne un dispositif de comptage de particules, telles que des graines distribuées par un semoir, des gravillons, des particules d'engrais, ou toutes autres particules distribuées par une machine fixe ou mobile.

Actuellement, lors du semis, la dose de semence distribuée demande une précision de plus en plus grande. En effet, une dose précise et une bonne régularité de distribution des graines sont à la fois nécessaires pour économiser les semences qui sont de plus en plus coûteuses. De plus, la précision de la dose de semence permet d'assurer une couverture végétale homogène ou permet de moduler le nombre de plantes au mètre carré, selon les zones d'une même parcelle en fonction du potentiel de production du sol.

Par conséquent, la précision du semis nécessite l'utilisation de semoirs capables de maîtriser parfaitement la dose de semence.

A cet effet, les semoirs dits « mono-graines » sont les plus précis, car ils distribuent un nombre de graines par hectare alors que les semoirs volumétriques distribuent un volume de semence. Cependant, la précision de ces semoirs ne peut être certaine que par un comptage des graines distribuées dans chaque soc.

On a alors proposé d'équiper les semoirs de dispositifs de comptage comportant des capteurs dont le rôle est de fournir le nombre de graines distribuées dans chaque soc ainsi que la régularité de la distribution.

L'information ainsi fournie permet à la fois de détecter les dysfonctionnements du semoir tels que des descentes bouchées, des problèmes mécaniques, et d'assurer le respect de la consigne « nombre de graines au mètre carré » en informant d'un mauvais réglage du système de distribution et/ou, dans certains cas, de fournir les informations permettant de piloter un réglage automatique de différentes parties du semoir.

De tels dispositifs de comptage peuvent être du type comportant un capteur photoélectrique, un capteur utilisant un champ magnétique, permettant de détecter le passage d'une graine. Le nombre de capteurs étant multiplié par le nombre de rangs d'un semoir, l'emploi de ces dispositifs est relativement coûteux et, de ce fait, peu utilisé.

De plus, le pelliculage ou l'enrobage des semences encrasse les conduits, ce qui nuit au bon fonctionnement des capteurs à base d'optique.

On a proposé d'utiliser alors des capteurs piézoélectriques qui sont constitués de matériaux peu fragiles.

Ainsi, par exemple dans SU-938788, on propose un capteur piézoélectrique positionné à la sortie du tube de sortie d'une trémie de graines de telle sorte que le flux de graines percute le capteur lorsqu'il s'écoule vers le conduit de semis. La force du flux est convertie en signaux qui sont amenés à un amplificateur. Ces signaux séparés et filtrés permettent de déterminer la masse de graine s'écoulant qui est proportionnelle à la force du signal. Un tel dispositif permet de contrôler le débit d'alimentation planifié mais ne permet pas un réel comptage graine par graine.

On a proposé également d'utiliser un capteur de flux de graines comprenant un tube de semis à travers lequel s'étend radialement une tige, la vibration de la tige du fait de l'impact de graine étant détectée par un capteur piézoélectrique. On peut ainsi contrôler s'il existe un blocage dans le tube.

Dans US-A-4 079 362, on a proposé également d'équiper un semoir avec un capteur piézoélectrique permettant de contrôler le flux de graines.

Cependant, l'ensemble des dispositifs décrits précédemment ne permet que le contrôle de l'existence d'un flux et du débit de ce flux, ce qui ne permet pas une très grande précision pour assurer une dose précise et une couverture homogène et de plus, ils ne peuvent servir à un semoir dit mono-graine.

Dans Le document US-A-4 238 790, on décrit un dispositif de contrôle qui comprend des unités de détection du flux de graines à travers chaque coutre d'un semoir et des unités de signalisation installées sur une partie du semoir sur laquelle les coutres sont portés. Les unités de détection peuvent être constituées de détecteurs piézoélectriques. Le dispositif fonctionne de la manière suivante : le capteur piézo-électrique est positionné dans la trajectoire des graines à semer de telle sorte que, lorsque les graines tombent par gravité, elles bombardent ou heurtent le capteur piézo-électrique. Ainsi, ce capteur piézo-électrique est positionné de sorte que le flux de graines puisse heurter le capteur. Par conséquent, on obtient une estimation du flux de graines permettant d'estimer la distribution de graines.

Cependant, la détection par choc des graines sur un capteur tel que décrite dans ce brevet US-A-4 238 790 et dans les documents cités précédemment engendre également une perturbation de la fréquence de distribution, le choc impliquant une perte de vitesse des particules, ce qui conduit à une distribution irrégulière, les particules subissant des variations différentes engendrant soit des rapprochements de particules soit des écarts plus grands que ceux prévus dans la distribution.

Afin de pallier cet inconvénient, le but de la présente invention est de proposer un dispositif précis de comptage de particules distribuées, utilisant un tel capteur piézoélectrique et dans lequel la régularité de la distribution n'est pas perturbée.

A cet effet, l'invention a pour objet, un dispositif de comptage de particules distribuées, telles que des graines distribuées dans un semoir, du type comprenant un capteur piézoélectrique émettant un signal lors du contact d'une particule et des moyens de traitement et d'analyse desdits signaux émis par le capteur, caractérisé en ce qu'il comporte en outre un conduit tubulaire intégrable dans le circuit de distribution une à une des particules, ledit conduit tubulaire comportant une portion de sa paroi servant de zone de contact pour les particules, ladite portion de paroi étant en liaison directe avec la zone sensible dudit capteur piézoélectrique de manière à lui transmettre la force exercée par les particules lors d'un contact des particules avec la zone de contact, ainsi que des moyens de guidage de chaque particule circulant dans ledit conduit pour forcer chaque particule à entrer en contact avec la zone de contact par frottement desdites particules contre ladite zone de contact.

Ainsi, le dispositif est agencé pour que la mise en contact des particules avec la zone de contact s'effectue par frottement des particules contre ladite zone de contact de manière à conserver avantageusement l'écartement initial entre les particules distribuées. En effet, le frottement des particules contre la zone de contact avec le capteur ne perturbe pas la régularité de la distribution contrairement à un impact de la particule sur le capteur.

Ainsi, de manière avantageuse, chaque particule circulant dans le circuit de distribution de particules présente une trajectoire imposée par les moyens de guidage qui l'amène à venir en contact par frottement, contre la zone de contact en liaison avec la partie sensible du capteur piézoélectrique, chaque frottement provoquant un signal qui est envoyé vers les moyens de traitement et d'analyse de manière à indiquer une fréquence de passage des particules. Les particules ne rentrent donc pas en contact directement avec la zone sensible du capteur piézoélectrique qui ne risque donc plus de détériorations ou de salissures déposées par les particules telles que les graines qui peuvent être enrobées de produits phytosanitaires.

De plus, de manière très avantageuse, les particules plus petites pouvant se détacher des particules distribuées ne peuvent pas être comptabilisées car elles n'exercent pas de force suffisante alors que dans les systèmes à capteur optique, elles pouvaient être comptabilisées et fausser l'analyse.

Par ailleurs, la valeur du signal émis par le capteur piézoélectrique est fonction de l'énergie fournie par la particule, ce qui permet également une exploitation du signal sous forme d'informations telles que la taille de la particule, la vitesse de l'air dans le cas d'un circuit de distribution pneumatique, permettant ainsi d'obtenir une information sur les réglages à effectuer pour obtenir un résultat optimal.

De préférence, la portion de la paroi du conduit tubulaire servant de zone de contact est mobile de manière à transmettre, à la zone sensible du capteur piézoélectrique qui est en liaison avec ladite zone de contact, la force exercée par une particule en frottement contre elle.

Dans le cas d'un semoir, les graines sont engagées dans un circuit de distribution, pneumatique ou par gravité, comportant des tubes amenant les graines une à une ou en flux vers les socs, un dispositif de comptage selon l'invention étant mis en place au niveau de chaque tube.

Selon une première forme de réalisation de l'invention, les moyens de guidage sont constitués par la forme en coude du conduit tubulaire, la zone de contact se situant au niveau de la partie extérieure du coude du conduit tubulaire.

Ainsi, la force centrifuge des particules, liée à la forme coudée du conduit tubulaire forcent les particules à frotter contre la paroi extérieure dudit conduit tubulaire, au niveau de la zone de contact, de manière systématique et ladite zone de contact étant mobile, elle transmet alors la force exercée à la partie sensible du capteur piézoélectrique.

L'impulsion du signal émis par le capteur piézoélectrique est donc fournie par la force exercée par le frottement des graines provenant de l'énergie centrifuge des graines.

La forme coudée du conduit tubulaire permet donc un guidage de chaque particule circulant dans ledit conduit tubulaire vers la zone de contact mais offre également l'avantage de permettre un ralentissement des particules en sortie du coude, de telle sorte que la régularité de la distribution n'est pas perturbée, par exemple dans le cas d'un semoir, chaque graine arrivant ralentie vers le soc.

En variante de cette forme de réalisation, le conduit tubulaire est constitué par un tube du circuit de distribution de particules qui présente une forme coudée.

Selon une seconde forme de réalisation de l'invention, les moyens de guidage sont constitués par des moyens propres à créer un tourbillon à l'intérieur d'un conduit tubulaire droit, le tourbillon généré déviant la trajectoire de chaque particule vers la zone de contact du conduit tubulaire. Dans ce cas, le conduit tubulaire n'a donc plus besoin d'être de forme coudée.

Le conduit tubulaire peut également être constitué d'un matériau rigide, le contact, de préférence le frottement, des particules entraînant des vibrations du conduit tubulaire rigide et la zone de contact transmettant alors ces vibrations à la zone sensible du capteur piézoélectrique.

De manière avantageuse, l'invention permet un comptage des graines que celles-ci soient amenées une à une ou en flux. En effet, avec le dispositif selon l'invention, chaque graine, en flux ou graine à graine, vient frotter, par exemple, contre la zone de contact du dispositif, les moyens de traitement et d'analyse des signaux émis par le capteur analysant et traitant les informations en fonction du type graine à graine ou flux de graines.

On décrira maintenant l'invention plus en détail en référence au dessin en annexe dans lequel :
la figure 1 représente une vue en coupe longitudinale du premier mode de réalisation du dispositif selon l'invention ;
la figure 2 représente une vue en coupe longitudinale d'une variante du dispositif de la figure 1 ;
la figure 3 représente une vue en coupe longitudinale du second mode de réalisation du dispositif selon l'invention ; et
la figure 4 représente un graphique visualisant les signaux par le capteur piézoélectrique du dispositif selon l'invention.

Le dispositif de comptage 1 de particules P distribuées selon l'invention est destiné à être utilisé dans des dispositifs de distribution de particules tels que des semoirs de graines de type mono graine.

Ainsi, un semoir présente un circuit de distribution des graines comprenant notamment un tube de distribution 2 amenant les graines P une par une, vers un soc. Un dispositif de comptage 1 selon l'invention est inséré dans le circuit de distribution du semoir au niveau de chaque tube 2.

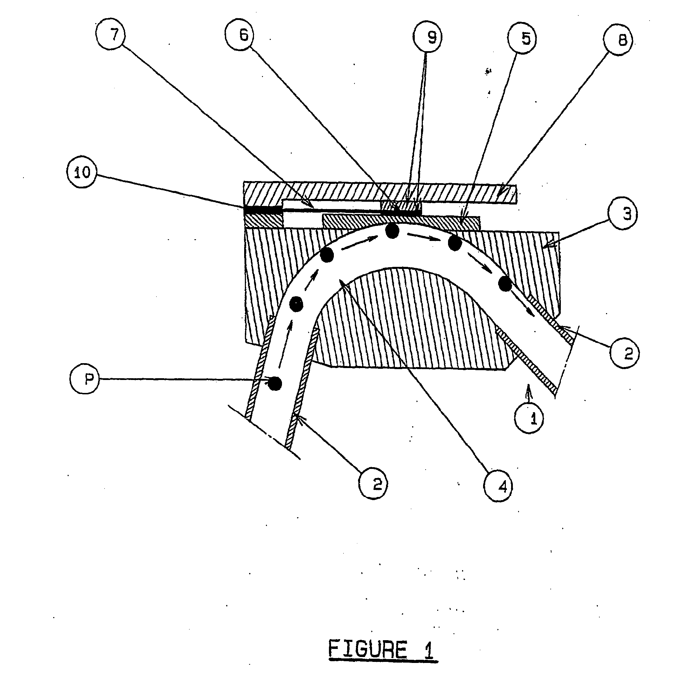

Comme cela est visible à la figure 1, le tube 2 du circuit de distribution est constitué de deux parties avec intercalé entre les deux parties le dispositif de comptage 1.

Ledit dispositif de comptage 1 comporte un support 3 comprenant un conduit tubulaire 4 de dimensions et d'une forme correspondantes à celles du tube de distribution 2 pour se raccorder aux deux parties dudit tube 2, les graines P transportées dans le tube 2 circulant alors également dans le conduit tubulaire 4.

Le conduit tubulaire 4 est coudé de telle sorte que les graines P circulant vers le soc viennent frotter sur l'une des parois dudit conduit tubulaire 4, la force centrifuge des graines P obligeant les graines P à systématiquement frotter contre la paroi extérieure de la partie coudée.

Cette paroi extérieure constitue la zone de contact 5 et est aménagée de manière à être mobile. Elle est positionnée en contact direct avec la partie sensible 6 d'un capteur piézoélectrique 7 porté par le support 3.

De préférence, la partie sensible 6 du capteur piézoélectrique 7 est précontrainte entre un couvercle 8 et la zone de contact 5.

Des cales 9 sont placées de part et d'autre de la partie sensible 6 du capteur piézoélectrique 7 de manière à déterminer la sensibilité du capteur piézoélectrique 7 souhaitée. Ces cales 9 sont constituées en un matériau souple tel que du caoutchouc ou en un matériau plus rigide tel qu'une matière plastique rigide.

Comme on peut le voir à la figure 1, une graine P arrive avec une certaine vitesse soit par transport pneumatique, soit par gravité et exerce du fait de la force centrifuge une force sur la partie sensible 6 du capteur 7 par l'intermédiaire de la zone de contact 5.

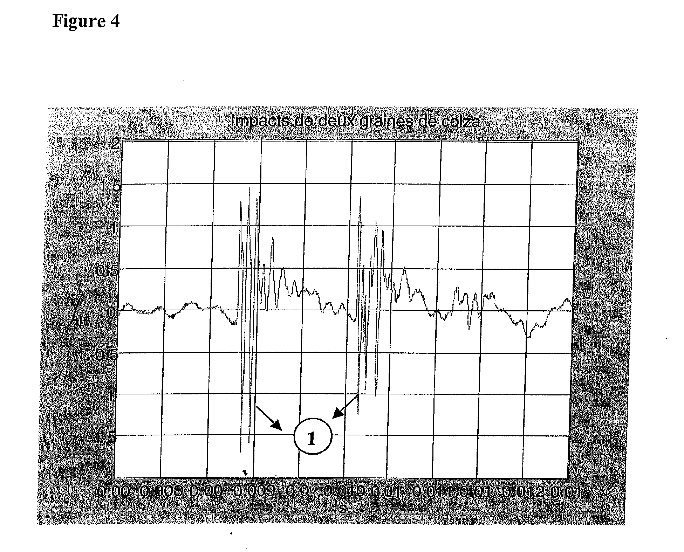

Toute variation de force sur la partie sensible 6 du capteur 7 engendre une impulsion électrique I comme on peut le voir sur la figure 4, impulsion I qui est transmise par la prise 10 et ensuite exploitée par les moyens de traitement et d'analyse pour indiquer la fréquence du passage de graine P.

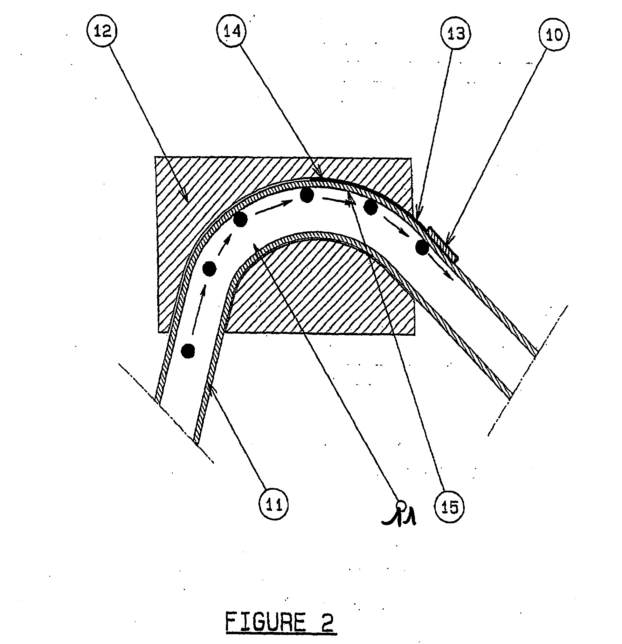

A la figure 2 qui représente une variante du mode de réalisation précédemment décrit, le tube de distribution 11, forme un coude logé dans un support 12. Ce tube de distribution peut être en matériau souple, contraint à former le coude par l'intermédiaire du support 12, le capteur piézoélectrique 13 étant logé dans le support 12 de telle sorte que la partie sensible 14 soit précontrainte contre le tube 11 au niveau de la zone de contact 15.

Cette forme de réalisation du dispositif de comptage selon l'invention est la plus simple et la plus économique car elle permet d'utiliser le tube 11 du circuit de distribution de particules, le tube 11 étant forcé de réaliser un coude en le maintenant comme dans un étau dans le support 12.

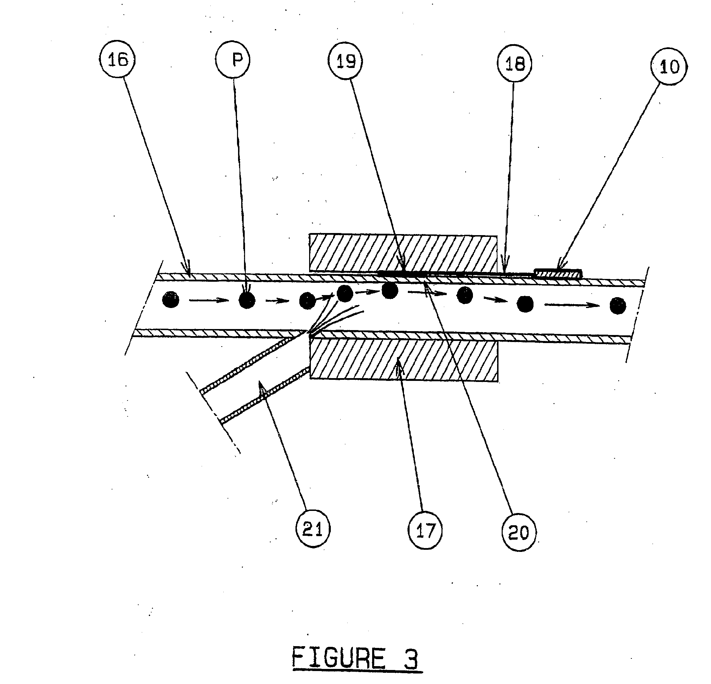

A la figure 3, on peut voir un second mode de réalisation d'un dispositif de comptage selon l'invention.

Dans un circuit de distribution de graine, par exemple, le tube 16 amenant la graine P vers le soc et réalisé droit constitue le conduit tubulaire. Un support 17 entoure une portion dudit conduit tubulaire 16 délimitant la zone correspondant au dispositif de comptage. Entre le support 17 et le conduit tubulaire 16 est positionné un capteur piézoélectrique 18 dont la partie sensible 19 s'étend contre une portion de la paroi du conduit tubulaire 16, définissant ainsi la zone de contact 20.

De manière à dévier la trajectoire des graines P vers la zone de contact 20, on définit des moyens de guidage dans le conduit tubulaire 16. Ces moyens de guidage sont constitués par des moyens propres à créer un tourbillon à l'intérieur du tube, tels que des moyens d'émission d'un jet d'air constitué par un tube d'injection d'air 21 débouchant dans le conduit tubulaire 16. Le jet d'air provoque un tourbillon qui dévie les graines P de leur trajectoire rectiligne et celles-ci viennent en contact avec la zone de contact 20, la force exercée par les graines P sur ladite zone de contact 20 étant transmise à la partie sensible 19 du capteur piézoélectrique 18.

Les moyens de guidage peuvent également être constitués par une cavité ménagée dans le support créant le tourbillon dans le conduit 16.

## Revendications

1. Dispositif de comptage (1) de particules (P) distribuées, telles que des graines distribuées dans un semoir, du type comprenant un capteur piézoélectrique (7, 13, 18) émettant un signal lors du contact d'une particule (P) et des moyens de traitement et d'analyse desdits signaux émis par le capteur (7),
**caractérisé en ce qu'**il comporte en outre un conduit tubulaire (4, 11, 16) intégrable dans le circuit de distribution une à une des particules (P), ledit conduit tubulaire (4, 11, 16) comportant une portion de sa paroi servant de zone de contact (5, 15, 20) pour les particules (P), ladite portion de paroi étant en liaison directe avec la zone sensible (6, 14, 19) dudit capteur piézoélectrique (7, 13, 18) de manière à lui transmettre la force exercée par les particules (P) lors d'un contact des particules (P) avec la zone de contact (5, 15, 20), ainsi que des moyens de guidage de chaque particule (P) circulant dans ledit conduit (4, 11, 16) pour forcer chaque particule (P) à entrer en contact avec la zone de contact (5, 15, 20) par frottement desdites particules (P) contre ladite zone de contact (5, 15, 20).

2. Dispositif selon la revendication 1,
**caractérisé en ce que** la portion de la paroi du conduit tubulaire (4, 11, 16) servant de zone de contact (5, 15, 20) est mobile de manière à transmettre, à la zone sensible (6, 14, 19) du capteur piézoélectrique (7, 13, 18) qui est en liaison avec ladite zone de contact (5, 15, 20), la force exercée par une particule en contact par frottement, avec elle.

3. Dispositif selon la revendication 2,
**caractérisé en ce que** le conduit tubulaire est constitué d'un matériau rigide, le contact des particules entraînant des vibrations du conduit tubulaire rigide et la zone de contact transmettant alors ces vibrations à la zone sensible du capteur piézoélectrique.

4. Dispositif selon l'une des revendications 1 à 3,
**caractérisé en ce que** les moyens de guidage sont constitués par la forme en coude du conduit tubulaire (4, 11), la zone de contact (5, 15) se situant au niveau de la partie extérieure du coude du conduit tubulaire (4, 11).

5. Dispositif selon la revendication 4,
**caractérisé en ce que** le conduit tubulaire (4) porté par un support (3) présente des dimensions et une forme correspondantes à celles du tube de distribution (2) qui est constitué de deux parties, pour se raccorder auxdites deux parties.

6. Dispositif selon la revendication 5,
**caractérisé en ce que** la partie sensible (6) du capteur piézoélectrique (7) est précontrainte entre un couvercle (8) et la zone de contact (5).

7. Dispositif selon la revendication 6,
**caractérisé en ce que** des cales (9) en un matériau souple tel que du caoutchouc ou en un matériau plus rigide tel qu'une matière plastique rigide, sont placées de part et d'autre de la partie sensible (6) du capteur piézoélectrique (7) de manière à déterminer la sensibilité du capteur piézoélectrique (7) souhaitée.

8. Dispositif selon la revendication 4,
**caractérisé en ce que** le conduit tubulaire est constitué par le tube de distribution (11) lui-même formant un coude logé dans un support (12), le capteur piézoélectrique (13) étant logé dans le support (12) de telle sorte que la partie sensible (14) soit précontrainte contre le tube (11) au niveau de la zone de contact (15).

9. Dispositif selon l'une des revendications 1 à 3,
**caractérisé en ce que** les moyens de guidage sont constitués par des moyens propres à créer un tourbillon à l'intérieur du conduit tubulaire réalisé droit, le tourbillon généré déviant la trajectoire de chaque particule vers la zone de contact du conduit tubulaire.

10. Dispositif selon la revendication 9,
**caractérisé en ce que** le conduit tubulaire est constitué par un tube du circuit (16) de distribution de particules (P), le support (17) entourant une portion dudit conduit tubulaire (16) tandis qu'un capteur piézoélectrique (18) dont la partie sensible (19) s'étend contre une portion de la paroi du conduit tubulaire (16) est positionné entre le support (17) et le conduit tubulaire (16), et définit la zone de contact (20).

11. Dispositif selon l'une des revendications 9 et 10,
**caractérisé en ce que** les moyens de guidage sont constitués par des moyens d'émission d'un jet d'air dans le conduit tubulaire (16) constitué par un tube d'injection d'air (21) débouchant dans ledit conduit tubulaire (16).

12. Dispositif selon l'une des revendications 9 et 10,
**caractérisé en ce que** les moyens de guidage sont constitués par une cavité ménagée dans le support (17) créant le tourbillon dans le conduit (16).
